# EUROPEAN PATENT APPLICATION

(11) **EP 4 072 123 A1**
(43) Date of publication of application: **12.10.2022**
(21) Application number: 21167607.7
(22) Date of filing: 09.04.2021
(51) Int. Cl.: H04N 5/232, H04W 4/40, H04L 29/08, H04W 4/48, B60R 1/00

(54) **A VEHICLE IMAGING SYSTEM**

(71) Applicant: Veoneer Sweden AB, 447 37 Vårgårda (SE)
(72) Inventor: Boström, Ola, 447 37 Vårgårda (SE)
(74) Representative: Westpatent AB

(57) **Abstract**

The present disclosure relates to vehicle imaging system (1) that comprises a digital camera arrangement (2) that is adapted to collect camera images, a control unit (3) and a vehicle communication interface (4). The vehicle imaging system (1) is adapted to be factory-mounted to a vehicle (5) and to be connected to a vehicle safety control system (6). The vehicle communication interface (4) is adapted to transmit collected camera images to at least one user device (7, 8, 9).

## Description

### DESCRIPTION OF THE DISCLOSURE

The present disclosure relates to a factory-mounted vehicle imaging system comprising at least one digital camera device that is adapted to collect camera images, and a control unit.

Many vehicle environment detection systems comprise one or more sensors such as for example radar sensor, LIDAR sensors, ultrasonic sensors and digital camera devices. These are used for collecting data used for safety arrangements as well as for driver assistance systems, providing inputs for issuing a warnings to a driver about an object in the path of a vehicle, as well as providing input to vehicle systems such as Adaptive Cruise Control (ACC) and Rear Cross Traffic Avoidance (RCTA) systems, where ACC is a longitudinal distance controller in an ADAS (Advanced Driver Assistant System). Other safety systems include AEB (automatic emergency braking).

For a digital camera device, that can be in the form of, or comprised in, a vehicle imaging system, a camera module is mounted to a camera housing. The camera module comprises a lens assembly and a printed circuit board (PCB) to which an image sensor and associated components are mounted.

A camera device that is directed towards the outside of the vehicle can be adapted to collect images of the surroundings, and may be used to identify landmarks. A camera device that is directed towards the interior of the vehicle can be adapted to collect images of a driver, and can for example provide input for detecting when a driver becomes tired and/or inattentive. It is, however, desired to expand the opportunities for using the vehicle imaging system in further safety applications as well as other applications. It is an object of the present disclosure to enable this.

Said object is achieved by means of a vehicle imaging system that comprises a digital camera arrangement that is adapted to collect camera images, a control unit and a vehicle communication interface. The vehicle imaging system is adapted to be factory-mounted to a vehicle and to be connected to a vehicle safety control system. The vehicle communication interface is adapted to transmit collected camera images to at least one user device.

This means that camera images collected by the factory-mounted digital camera arrangement can be transmitted to at least one user device, for example to a driver user device and/or a passenger user device. The collected images can furthermore be shared with other user devices that can be external, remote from the vehicle.

According to some aspects, the communication interface is adapted to establish a connection to a wireless network that comprises at least one wireless communication node.

In this manner, the communication interface can access the user devices via the wireless network. This means that the communication interface is adapted to access the wireless network and in that way be able to contact the user devices in question.

According to some aspects, the control unit is adapted to receive instructions from at least one control user device, the instructions being related to when, and to which user device, collected camera images are transmitted. In this manner, an uncomplicated control of where to transmit the collected camera images is obtained.

According to some aspects, the vehicle imaging system comprises at least one control user device that is arranged for wireless communication. The control user device is adapted to provide instructions to the control unit regarding when, and to which user device, collected camera images are transmitted, in response to user input.

This means that one or more user devices can be comprised in the vehicle imaging system. In particular a user device, such as a smartphone, can be modified by means of software, which for example can be associated with of a so-called App. Specific features are then provided that enable the user device to function as a control user device in the vehicle imaging system.

According to some aspects, the control user device is adapted to initiate streaming of collected camera images to an external user device in response to user input.

This means that streaming of collected camera images to the external user device can be performed directly via the communication interface, or via the control user device.

According to some aspects, the vehicle imaging system comprises at least one digital camera part that is adapted to collect camera images of a view ahead of the vehicle, and/or at least one digital camera part that is adapted to collect camera images of an interior of the vehicle.

The present disclosure is thus versatile, being adapted to many different configurations of digital camera parts.

According to some aspects, the control unit is adapted to include processed vehicle sensor data relating to detected objects, acquired by means of at least one vehicle environment sensor, to the collected camera images.

In this way, an external party is enabled to see detected objects overlaid on a streamed video sequence, where the detected objects can form a base for warnings supplied to the driver as well as a base for automatic safety actions such as for example automatic braking. This means that the external party may form a virtual passenger that can support the driver in different ways, and possibly to understand which important objects that the driver has looked at and not, and to shout or react if something suddenly happens, or if the driver regularly is missing something.

According to some aspects, each user device is at least one of a mobile phone and a computer device.

According to some aspects, the control unit and the vehicle communication interface are also comprised in a vehicle media system that is adapted to handle all communication between onboard user devices and other user devices. The vehicle communication interface is then a part of an existing system in the vehicle.

This object is also achieved by means of methods associated with the above advantages.

### BRIEF DESCRIPTION OF THE DRAWINGS

The present disclosure will now be described more in detail with reference to the appended drawings, where:
- Figure 1: shows a schematic cut-open part of a vehicle comprising a vehicle imaging system;
- Figure 2: shows a schematic top view of a vehicle comprising the vehicle imaging system;
- Figure 3: shows a schematic view of a vehicle imaging system, a vehicle media system and a vehicle safety system;
- Figure 4: shows a schematic view of a computer program product; and
- Figure 5: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

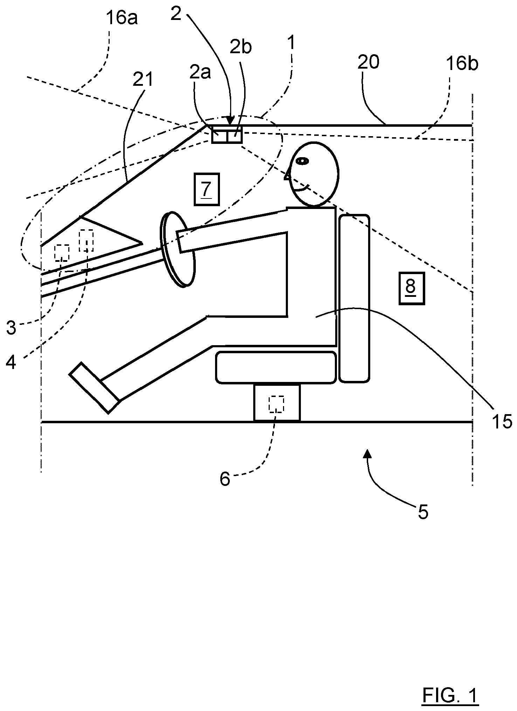

Figure 1 schematically shows a cut-open part of a vehicle 5, where the vehicle 5 comprises a digital camera arrangement 2. The digital camera arrangement 2 comprises an exterior camera part 2a that is arranged for capturing images of the surroundings outside the vehicle 5 by means of a certain first field of view 16a. According to some aspects, the digital camera arrangement 2 also, or alternatively, comprises in interior camera part 2b that is arranged for capturing images of a driver 15 by means of a certain second field of view 16b, where these images, which may include eye movements, for example can be used for detecting a degree of driver drowsiness.

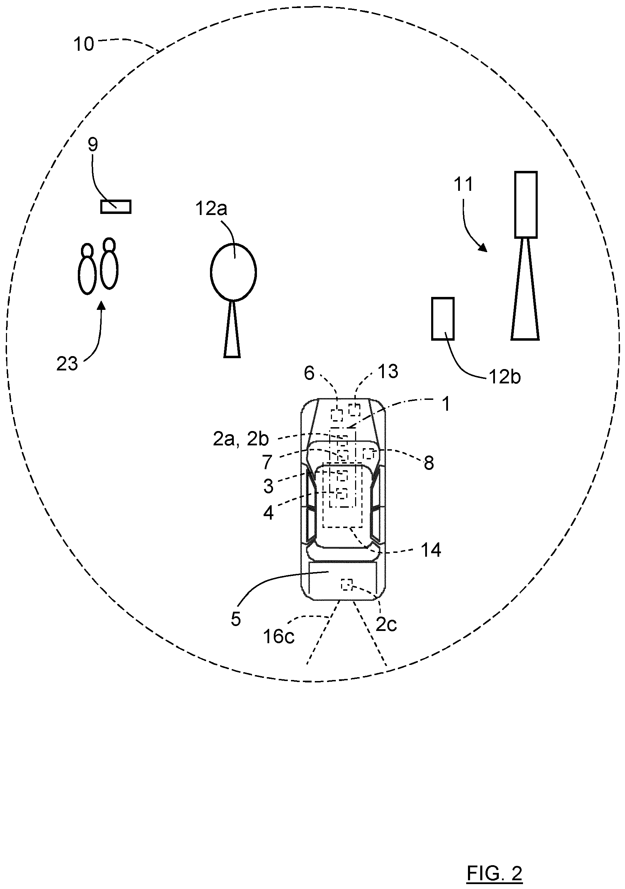

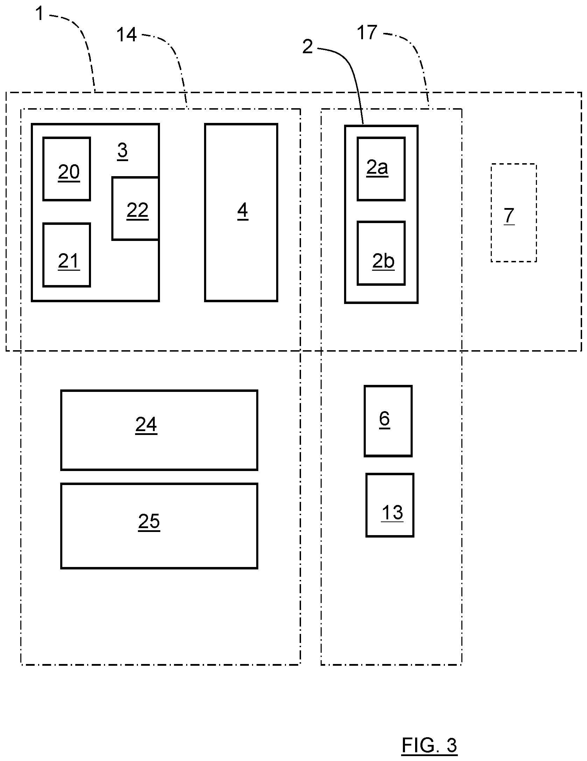

Figure 2 schematically shows a top view of the vehicle 5 in a traffic situation, and Figure 3 shows a schematic view of a vehicle imaging system 1, a vehicle media system 14 and a vehicle safety system 17. With reference also to Figure 2 and Figure 3, the digital camera arrangement 2 is comprised in a vehicle imaging system 1 that comprises at least one digital camera part 2a, 2b that is adapted to collect camera images. At least one digital camera device, for example the exterior camera part 2a is adapted to collect camera images of a view ahead of the vehicle 5 by means of the first field of view 16a, and/or at least one digital camera device, for example the interior camera part 2b is adapted to collect camera images of an interior of the vehicle 5 by means of the second field of view 16b.

The vehicle imaging system 1 further comprises a control unit 3 and a vehicle communication interface 4. The vehicle imaging system 1 is adapted to be factory-mounted to a vehicle 5 and to be connected to a vehicle safety control system 6.

The vehicle safety control system 6 is according to some aspects comprised in a vehicle safety system 17.

According to the present disclosure, the vehicle communication interface 4 is adapted to transmit collected camera images to at least one user device 7, 8, 9. Here, there is a first user device 7, a second user device 8 and a third user device 9. According to some aspects, a user device 7, 8, 9 can be a smartphone or a portable computer, and the first user device 7 is a driver user device 7 and the second user device 8 is a passenger user device 8 and the third user device 9 is an external user device 9 that is remote from the vehicle 5.

By means of the present disclosure, camera images collected by the factory-mounted digital camera arrangement 2 can be transmitted to at least one user device, for example to the driver user device 7 and/or the passenger user device 8, where the driver 15 and/or a passenger can choose to share the collected images with other user devices such as the external user device 9.

According to some aspects, this is enabled by the control unit being 3 adapted to receive instructions from at least one control user device 7, 8, the instructions being related to when, and to which user device 7, 8, 9, collected camera images are transmitted.

According to some aspects, the communication interface 4 is adapted to establish a connection to a wireless network 10 that comprises at least one wireless communication node 11.

In this manner, the communication interface 4 can access the user devices 7, 8, 9 via the wireless network 10. This means that the communication interface 4 is adapted to access the wireless network 10 and in that way be able to contact the user devices in question.

According to some aspects, the vehicle imaging system 1 comprises at least one control user device 7, 8 that is arranged for wireless communication, where the control user device 7, 8 is adapted to provide instructions to the control unit 3 regarding when, and to which user device, collected camera images are transmitted, in response to user input.

This means that one or more user devices 7, 8 can be comprised in the vehicle imaging system 1. In particular a user device, such as a smartphone, can be modified by means of software, which for example can be associated with of a so-called App. Specific features are then provided that enable the user device to function as a control user device in the vehicle imaging system 1. According to some aspects, as illustrated in Figure 1 and by dashed lines in Figure 3, the driver user device 7 is a control user device, while a passenger user device 8 is not a control user device. In another example, one or more passenger user device can constitute control user devices, and the driver's user device 8 does not necessarily need to constitute a control user device.

According to some aspects, the control user device 7 is adapted to initiate streaming of collected camera images to an external user device 9 in response to user input. This means that streaming of collected camera images to the external user device 9 can be performed directly via the communication interface 4, or via the control user device 7. The streamed collected camera images, that form a streamed video sequence, can be compressed and transmitted in a suitable format to enhance speed and efficiency for the data transfer.

For example, this means that when the driver 15, or a passenger, receives or initiates a call from/with an external party 23 via the external user device 9, he can push a button or similar at a control user device 7, 8 to allow at least one camera view 16a, 16b to be shared with the external party 23, and this provides a number of advantages that are both of social character and provides enhanced safety features. In this context an external party 23 is one or more persons that are not present in the vehicle 5, having access to the external user device 9.

A similar dialogue environment can be created as if the external party 23 was present in the passenger seat, alleviating conversation, where objects and traffic events can provide topics for discussion. This also provides additional eyes on the road to judge what is happening which gives the external party 23 a possibility to interact/engage with the driver which increases both safety and comfort.

In particular in the case when the vehicle imaging system 1 comprises both at least one exterior camera part 2a and at least one interior camera part 2b, the external party 23 is furthermore enabled to adapt the discussion or dialogue to the present driving situation. For example, the external party 23 can stop talking when driver 15 seems busy or distracted and/or the traffic situation seems complicated, and start talking when the driver 15 seems receptive and the traffic situation seems calm.

The external party 23 is furthermore enabled to engage with what the driver 15 is seeing, and how he is driving by for example commenting of the driver 15 seems drowsy. Having a person to talk to and who can comment on what happens in the traffic situation in front of the vehicle 5, sees what the driver 15 sees, can avoid an/or counteract drowsiness.

The external party 23 can for example ask if the driver 15 feels tired, tell him that he looks tired, tell him that the driving does not seem safe, and to encourage and motivate the driver 15 to stop and take a break. The external party 23 can thus follow the driver, on line, and provide company as well as helpful suggestions. This can for example be an important safety feature for a driver that is looking for empathy, company and support when for instance driving in hard conditions such as difficult whether, for example a snow storm.

The actual traffic situation can also be shared with the external party 23 who for example can be interested in the details of a traffic jam because they might be driving there themselves soon.

It is also possible to activate the exterior camera part 2a when someone in the first field of view 16a is considered to behave in a bad manner or is considered to drive in a bad or in general disturbing manner. This could be used to share on social media, but also for reporting a traffic violation to the police.

According to some aspects, the control unit 3 is adapted to include processed vehicle sensor data relating to detected objects 12a, 12b, acquired by means of at least one vehicle environment sensor 13, to the collected camera images. The at least one vehicle environment sensor 13 can for example be at least one of radar sensors, LIDAR sensors and ultrasonic sensors and digital camera devices such as heat camera devices.

The data to be streamed may thus be amended before streaming by adding processed data that originally has been acquired by means of the vehicle environment sensor 13. The processed data may correspond to detected objects 12a, 12b such as vehicles, pedestrians, animals, traffic signs, road boundaries etc. in front of the vehicle 5 within the first field of view 16a. In this way, the external party 23 is enabled to see such detected objects 12a, 12b overlaid on the streamed video sequence, where these detected objects 12a, 12b can form a base for warnings supplied to the driver 15 as well as a base for automatic safety actions such as for example automatic braking.

This means that the external party 23 may form a virtual passenger that can support the driver in different ways, and to understand which important objects that the driver 15 has looked at and not, and to shout or react if something suddenly happens, or if the driver 15 regularly is missing something.

An example of another type of information that can be supplied to the external party 23 relates to where the driver 15 is watching, being determined from the driver's gaze direction. An external party 23 may then determine that the driver 15 may not see a detected object 12a, 12b that forms an obstacle in front of the vehicle 5, which can be a sign of drowsiness. The external party 23 may then inform the driver 15 of the situation, and verify that the driver 15 acts in an acceptable manner.

The present disclosure can be used in several other contexts as will be described in the following. When the vehicle imaging system 1 comprises at least one digital camera part 2b that is adapted to collect camera images of an interior of the vehicle 5 by means of the second field of view 16b, one or more passengers can also participate in a dialogue with the external party 23. In this manner, a live video of passengers/occupants in the car can be streamed to the external party 23, for example enabling everyone in the vehicle to participate in a social media event.

Optionally, the camera view to be used can be selected by toggling between the first field of view 16a and the second field of 16b, as well as other possible optional fields of view. A combination is also possible such that several camera views are streamed simultaneously and displayed side by side or in an overlaid manner to create a desired effect.

A social media event can comprise discussions about where the vehicle occupants are, where they are going, how they are dressed etc., and this event can be enhanced by means of suitable camera images.

When stopping for coffee or at a restaurant or at another interesting site, the vehicle occupants can share this event with friends comprised in the external party 23 by means of the first field of view 16a. This could be used to confirm that the vehicle 5 has reached a certain restaurant or another target destination. In a similar way, when on vacation, or when doing sightseeing, images of interesting sights can be collected to form video streams that can be shared with the external party 23, for example friends/family, or via social media.

The present disclosure also facilitates for persons in the vehicle to participate in on-line meetings such as Facetime, Snapchat, Skype, Teams, Zoom, and thus presents advantages that are useful both for free-time conversations and business meetings. It is even possible to combine views such that a person in the vehicle 5 that is captured by the interior camera part 2b has a background of the scenario ahead of the vehicle, captured by the exterior camera part 2a.

An underlying concept of the present disclosure is to use a factory-mounted digital camera arrangement 2 that is connected to a vehicle safety control system 6 in a new way. Camera images which are collected by means of the digital camera arrangement and can form a video stream are normally not available to a user, but are only used in a vehicle safety system. By making these collected camera images available to a user, a variety of opportunities and advantages related to increased safety, and also increased comfort and possibilities for social interaction, are enabled.

Figure 3 schematically illustrates a vehicle imaging system 1 comprising a digital camera arrangement 2 adapted to collect camera images, a control unit 3 and a vehicle communication interface 4 according to aspects of the present disclosure.

According to some aspects, as shown in Figure 3, the control unit 3 and the vehicle communication interface 4 are comprised in a vehicle media system 14 that is adapted to handle all communication between onboard user devices 7, 8 and other user devices 9. The vehicle communication interface 4 is then a part of an existing system in the vehicle.

According to some aspects, with continued reference to Figure 3, the vehicle safety system 17 comprises the digital camera arrangement 2, the vehicle safety control system and at least one at least one vehicle environment sensor 13 such as least one of radar sensors, LIDAR sensors and ultrasonic sensors and digital camera devices such as heat camera devices.

According to some aspects, the vehicle imaging system 1 is completely or partly comprised in the vehicle media system 14, and the according to some aspects, control unit 3 is dedicated for handling the vehicle imaging system 1. The vehicle safety control system 6 may comprise a safety control unit.

According to some aspects, in an example illustrating the vehicle media system 14, that can be a so-called infotainment system, the driver 15 is getting engaged on a video enabled call, using Facetime, Skype, Teams or similar. An infotainment system, and thus the vehicle media system 14, can for example be configured to handle music via radio or streamed via the Internet, video streamed via the Internet, map functions for navigations purposes as well as present status of the vehicle and its functions.

According to some aspects, the vehicle media system 14 comprises a suitable user input interface 24, for example in the form of a keyboard that can be comprised in a touch-sensitive screen, or in the form of a microphone that can be connected to a voice-control functionality. According to some further aspects, the vehicle media system 14 also comprises a suitable user output interface 25, for example in the form of a screen and/or a speaker.

The call is set-up as a normal phone call using voice commands or screen buttons controlling the vehicle media system 14 which is remotely connected the driver mobile phone 7, using WiFi, Bluetooth or a USB connections, or by answering/dialing on the mobile phone itself.

The call is, as a normal voice call, automatically connected to a hands-free system that is a part of the vehicle media system 14. Once set-up, the control of the call is made by means of the vehicle media system 14 in a similar way, using push buttons on screen or voice commands.

Screen or voice commands inform the driver 15 that a video call is possible, or that this is a Teams meeting, Facetime connection etc., and request the driver 15 to decide whether a video enabled call should be set up. The interaction is still performed either by push buttons on the screen or by voice commands.

If/when the driver 15 is acknowledging the request, the vehicle media system 14 will arrange for a video stream to be transmitted to the remote party 23. The driver 15 is given an option to share a video stream from the vehicle's digital camera arrangement 2, for example of his own face by means of the interior camera part 2b, and/or of the environment in front of the vehicle 5 by means of the exterior camera part 2a.

If the exterior camera part 2a is selected, a video stream, which can be compressed or bandwidth adapted, from the exterior camera part 2a is shared as an image for the remote party 23 in the call. This option will thus give the driver 15 a possibility to share the view of the road ahead and all events that might appear there with the calling party.

This means that activating a camera image should be prepared as an option by the vehicle media system 14 for the driver 15, and activated/accepted only by the driver 15, or other car occupants.

According to some aspects, each user device 7, 8, 9 is at least one of a mobile phone and a computer device.

According to some aspects, collected camera images can also be shared with additional services to increase safety, as sensor sharing in cross sections. The vehicle safety system 17 can for example receive a request to share a front-looking video stream with another vehicle's safety system to enhance the total visibility in a dangerous intersection.

According to some aspects, the communication does not have to run via the vehicle media system 14, but may run directly from one or more camera parts 2a, 2b to a control user device 7, 8 and further to a remote or external user device 9. The processing needed may be handled by the camera arrangement 2.

It is appreciated that the methods and techniques described herein may be realized in hardware. This hardware is then arranged to perform the methods, whereby the same advantages and effects are obtained as have been discussed above.

With reference to Figure 3, Regarding the control unit 3, processing circuitry 20 is provided using any combination of one or more of a suitable central processing unit (CPU), multiprocessor, microcontroller, digital signal processor (DSP), etc., capable of executing software instructions stored in a computer program product, e.g. in the form of a storage medium 21. The processing circuitry 20 may further be provided as at least one application specific integrated circuit (ASIC), or field programmable gate array (FPGA).

Particularly, the processing circuitry 20 is configured to cause the control unit 3 to perform a set of operations, or steps, for example the methods described herein. For example, the storage medium 21 may store the set of operations, and the processing circuitry 20 may be configured to retrieve the set of operations from the storage medium 21 to cause the control unit to perform the set of operations. The set of operations may be provided as a set of executable instructions. Thus, the processing circuitry 20 is thereby arranged to execute methods as herein disclosed.

The storage medium 21 may also comprise persistent storage, which, for example, can be any single one or combination of magnetic memory, optical memory, solid state memory or even remotely mounted memory.

The control unit 3 may further comprise a control unit communication interface 22 for communication with at least one other device 2, 4, 6. As such the control unit communication interface 22 may comprise one or more transmitters and receivers, comprising analogue and digital components and a suitable number ports for wireline or wireless communication.

The processing circuitry 20 controls the general operation of the control unit 3, e.g. by sending data and control signals to the communication interface 22 and the storage medium 21, by receiving data and reports from the communication interface 22, and by retrieving data and instructions from the storage medium 21. Other components, as well as the related functionality, of the unit are omitted in order not to obscure the concepts presented herein.

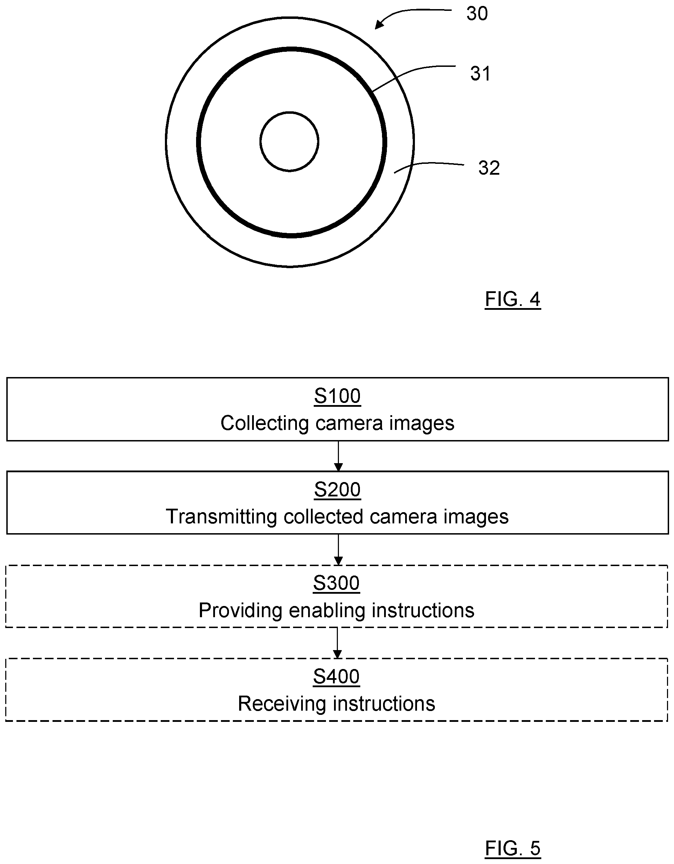

Figure 4 schematically illustrates a computer program product 30 comprising a computer program 31 according to the disclosure above, and a computer readable storage medium 32 on which the computer program is stored.

With reference to Figure 5, the present disclosure also relates to a method for a vehicle imaging system 1, where the method comprises collecting S100 camera images using a factory-mounted digital camera arrangement 2, and transmitting S200 collected camera images to at least one user device 7, 8, 9 in response to user input.

This means that camera images collected by the factory-mounted digital camera arrangement 2 can be transmitted to at least one user device, for example to the driver user device 7 and/or the passenger user device 8.

According to some aspects, the method further comprises receiving S400 instructions from at least one control user device 7, 8, the instructions being related to when collected camera images are transmitted, and to which user device 7, 8, 9. According to some aspects, the method comprises streaming collected camera images to an external user device 9 in response to user input.

This means that the driver 15 and/or a passenger can choose to share the collected images with other user devices such as the external user device 9 by means of a control user device 7, 8.

According to some aspects, the method further comprises including processed vehicle sensor data, relating to detected objects 12a, 12b, acquired by using at least one vehicle environment sensor 13, to the collected camera images.

In this way, the external party 23 is enabled to see such detected objects 12a, 12b overlaid on the streamed video sequence, where these detected objects 12a, 12b form a base for warnings supplied to the driver 15 as well as a base for automatic safety actions such as for example automatic braking.

According to some aspects, the method further comprises providing S300 enabling instructions to a control user device 7, 8, which instructions enable a user 15 to control the control vehicle imaging system 1 via the control user device 7, 8.

This means that a user device 7, 8, for example a smartphone, is modified by means of software that comprises enabling instructions. Such software can for example be associated with a so-called App. Specific features are then provided that enable the user device to function as a control user device in the vehicle imaging system 1.

According to some aspects, the instructions enable the control user device 7, 8 to control when, and to which user device 7, 8, 9, collected camera images are transmitted, in response to user input.

The method above is described in steps that can be taken in any suitable manner in order to obtain the desired result according to the present disclosure.

The present disclosure is not limited to the examples above, but may vary freely within the scope of the appended claims. For example, all different examples provided may be combined in any suitable manner.

According to some aspects, the digital camera arrangement 2 may comprise one or more camera parts, and may also comprise a rearward-facing camera part 2c that is adapted to collect camera images within a field of view 16c that faces in a rearward direction outside the vehicle 5 as illustrated in Figure 2.

Each camera part 2a, 2b, 2c comprises one or more separate digital cameras.

According to some aspects, in the present context, something being factory-mounted to a vehicle means that something has been mounted to the vehicle during assembly of the vehicle.

## Claims

1. A vehicle imaging system (1) that comprises a digital camera arrangement (2) that is adapted to collect camera images, a control unit (3) and a vehicle communication interface (4), where the vehicle imaging system (1) is adapted to be factory-mounted to a vehicle (5) and to be connected to a vehicle safety control system (6), wherein the vehicle communication interface (4) is adapted to transmit collected camera images to at least one user device (7, 8, 9).

2. The vehicle imaging system (1) according to claim 1, wherein the communication interface (4) is adapted to establish a connection to a wireless network (10) that comprises at least one wireless communication node (11).

3. The vehicle imaging system (1) according to any one of the claims 1 or 2, wherein the control unit (3) is adapted to receive instructions from at least one control user device (7, 8), the instructions being related to when, and to which user device (7, 8, 9), collected camera images are transmitted.

4. The vehicle imaging system (1) according to any one of the previous claims, wherein the vehicle imaging system (1) comprises at least one control user device (7, 8) that is arranged for wireless communication, where the control user device (7, 8) is adapted to provide instructions to the control unit (3) regarding when, and to which user device, collected camera images are transmitted, in response to user input.

5. The vehicle imaging system (1) according to any one of the claims 3 or 4, wherein the control user device (7, 8) is adapted to initiate streaming of collected camera images to an external user device (9) in response to user input.

6. The vehicle imaging system (1) according to any one of the previous claims, wherein the vehicle imaging system (1) comprises at least one digital camera part (2a) that is adapted to collect camera images of a view ahead of the vehicle (5), and/or at least one digital camera part (2b) that is adapted to collect camera images of an interior of the vehicle (5).

7. The vehicle imaging system (1) according to any one of the previous claims, wherein the control unit (3) is adapted to include processed vehicle sensor data relating to detected objects (12a, 12b), acquired by means of at least one vehicle environment sensor (13), to the collected camera images.

8. The vehicle imaging system (1) according to any one of the previous claims, wherein each user device (7, 8, 9) is at least one of a mobile phone and a computer device.

9. The vehicle imaging system (1) according to any one of the previous claims, wherein the control unit (3) and the vehicle communication interface (4) also are comprised in a vehicle media system (14) that is adapted to handle all communication between onboard user devices (7, 8) and other user devices (9).

10. A method for a vehicle imaging system (1), where the method comprises:
collecting (S100) camera images using a factory-mounted digital camera arrangement (2); and
transmitting (S200) collected camera images to at least one user device (7, 8, 9) in response to user input.

11. The method according to claim 10, further comprising
receiving (S400) instructions from at least one control user device (7, 8), the instructions being related to when collected camera images are transmitted, and to which user device (7, 8, 9) .

12. The method according to any one of the claims 10 or 11, wherein the method comprises streaming collected camera images to an external user device (9) in response to user input.

13. The method according to any one of the claims 10-12, further comprising including processed vehicle sensor data, relating to detected objects (12a, 12b), acquired by using at least one vehicle environment sensor (13), to the collected camera images.

14. The method according to any one of the claims 10-13, further comprising
providing (S300) enabling instructions to a control user device (7, 8), which instructions enable a user (15) to control the control vehicle imaging system (1) via the control user device (7, 8).

15. The method according to claim 14, wherein the instructions enable the control user device (7, 8) to control when, and to which user device (7, 8, 9), collected camera images are transmitted, in response to user input.
